# FASCICULE DE BREVET EUROPEEN

(11) **EP 2 052 545 B1**
(45) Date de publication et mention de la délivrance du brevet: **02.10.2013**
(21) Numéro de dépôt: 07803994.8
(22) Date de dépôt: 06.07.2007
(51) Int. Cl.: H04N 7/24, H04N 7/26

(54) **DISPOSITIF ET PROCEDE DE CODAGE ET DE DECODAGE ECHELONNABLES DE FLUX DE DONNEES D'IMAGES, SIGNAL ET PROGRAMME D'ORDINATEUR CORRESPONDANTS**
EINRICHTUNG UND VERFAHREN ZUR SKALIERBAREN CODIERUNG UND DECODIERUNG DES FLUSSES VON BILDDATEN, DIESBEZÜGLICHES SIGNAL UND COMPUTERPROGRAMM
DEVICE AND METHOD OF SCALABLE CODING AND DECODING OF FLOW OF IMAGE DATA, RESPECTIVE SIGNAL AND COMPUTER PROGRAM

(30) Priorité: 10.07.2006 FR 0606272
(43) Date de publication de la demande: 29.04.2009
(73) Titulaire: Orange, 75015 Paris (FR)
(72) Inventeur: AMONOU, Isabelle, 35235 Thorigne-Fouillard (FR); PATEUX, Stéphane, 35700 Rennes (FR); KERVADEC, Stéphane, 35490 Sens de Bretagne (FR); CAMMAS, Nathalie, 35490 Sens de Bretagne (FR)
(74) Mandataire: Cabinet Plasseraud
(86) Numéro de dépôt international: PCT/FR2007/051615
(87) Numéro de publication internationale: WO 2008/007006

(56) Documents cités:
- SCHWARZ H ET AL: "Constrained Inter-Layer Prediction for Single-Loop Decoding in Spatial Scalability" 11 septembre 2005 (2005-09-11), IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, PAGE(S) 870-873 , XP010851192 ISBN: 0-7803-9134-9 le document en entier

## Description

Le domaine de l'invention est celui du codage et du décodage d'images ou de séquences vidéo d'images. Plus précisément, l'invention concerne une technique de codage et de décodage d'images échelonnables (en anglais "scalable"), c'est-à-dire à qualité adaptable et résolution spatio-temporelle variable.

De nombreux systèmes de transmission de données sont aujourd'hui hétérogènes, en ce sens qu'ils desservent une pluralité de clients disposant de types d'accès aux données très divers. Ainsi, le réseau mondial Internet par exemple, est accessible aussi bien à partir d'un terminal de type ordinateur personnel (PC) que d'un radiotéléphone. Plus généralement, la bande passante pour l'accès au réseau, les capacités de traitement des terminaux clients, la taille de leurs écrans varient fortement d'un utilisateur à l'autre. Ainsi, un premier client peut par exemple accéder au réseau Internet à partir d'un PC puissant, et disposer d'un débit ADSL ("Asymmetric Digital Subscriber Line" pour "Ligne d'abonné numérique à structure asymétrique") à 1024 kbits/s alors qu'un deuxième client cherche à accéder aux mêmes données au même instant à partir d'un terminal de type PDA ("Personal Digital Assistant" pour "assistant numérique personnel") connecté à un modem de faible débit.

Il est donc nécessaire de proposer à ces divers utilisateurs un flux de données qui soit adapté tant en terme de débit que de résolution des images à leurs différents besoins. Cette nécessité s'impose plus largement pour toutes les applications accessibles à des clients disposant de capacités d'accès et de traitement très diverses, et notamment les applications de :
- VOD ("Video On Demand" pour "vidéo à la carte"), accessibles aux terminaux de radiocommunication de type UMTS ("Universal Mobile Telecommunication Service" pour "service de télécommunication mobile universel"), aux PC ou aux terminaux de télévision avec accès ADSL, etc. ;
- mobilité de session (par exemple reprise sur un PDA d'une session vidéo commencée sur un téléviseur, ou, sur un mobile UMTS d'une session commencée sur GPRS ("General Packet Radio Service" pour "service général de radiocommunication par paquets")) ;
- continuité de session (dans un contexte de partage de la bande passante avec une nouvelle application) ;
- télévision haute définition, dans laquelle un encodage vidéo unique doit permettre de servir aussi bien des clients disposant d'une définition standard SD que des clients disposant d'un terminal à haute définition HD ;
- visioconférence, dans laquelle un encodage unique doit répondre aux besoins de clients disposant d'un accès UMTS et d'un accès Internet ;
- etc.

Pour répondre à ces différents besoins, on a développé des algorithmes de codage d'images échelonnables, ou "scalables", qui permettent une qualité adaptable et une résolution spatio-temporelle variable. Le codeur génère un flux compressé présentant une structure hiérarchique de couches, dans laquelle chacune des couches est emboîtée dans une couche de niveau supérieur. Par exemple, une première couche de données véhicule un flux à 256kbits/s, qui pourra être décodé par un terminal de type PDA, et une deuxième couche de données complémentaire véhicule un flux de résolution supérieure à 256kbits/s qui pourra être décodé, en complément du premier, par un terminal plus puissant de type PC. Le débit nécessaire pour le transport de ces deux couches emboîtées est dans cet exemple de 512 kbits/s.

Certains de ces algorithmes de codage vidéo échelonnables sont aujourd'hui en cours d'adoption par la norme MPEG ("Moving Picture Expert Group" pour "Groupe d'experts en codage d'images"), dans le cadre du groupe de travail MPEG VIDEO.

La première génération de ces algorithmes scalables (cf travaux de MPEG-4, notamment avec les technologies de type FGS - Fine Grain Scalability - Echelonnage à grain fin) ne s'est pas imposée car on lui reprochait une sous-optimalité en termes de compression.

Plus récemment, de nouveaux algorithmes se sont imposés pour répondre à ce problème d'efficacité. Ils sont aujourd'hui en cours d'adoption par la norme MPEG-4 AVC, dans le contexte du groupe de travail JVT joint entre l'ISO et l'IEC : SVC sera l'amendement 3 de la norme AVC (ISO/IEC 14496-10 Amdt3) (Scalable Video Coding - codage vidéo échelonnable).

Le modèle qui a été retenu récemment par SVC est basé sur un codeur échelonnable avec prédiction inter-couches et décomposition temporelle par prédiction bidirectionnelle (images B). Cette nouvelle norme est capable de fournir des flux scalables à grain moyen dans les dimensions temporelle, spatiale, et en qualité en quantification.

Le décodeur correspondant à la norme est décrit dans le document "Joint Draft 6", J. Reichel, M. Wien, H. Schwarz, JVT-S202, 2006,.

Les caractéristiques principales de cette solution sont les suivantes :
- solution pyramidale avec sous-échantillonnage des composantes d'entrée;
- décomposition temporelle par images B à chaque niveau,
- codage des couches successives en mode CGS (Coarse Grain Scalability - Echelonnage à grain grossier) ou en mode FGS (Fine Grain Scalability - Echelonnage à grain fin).

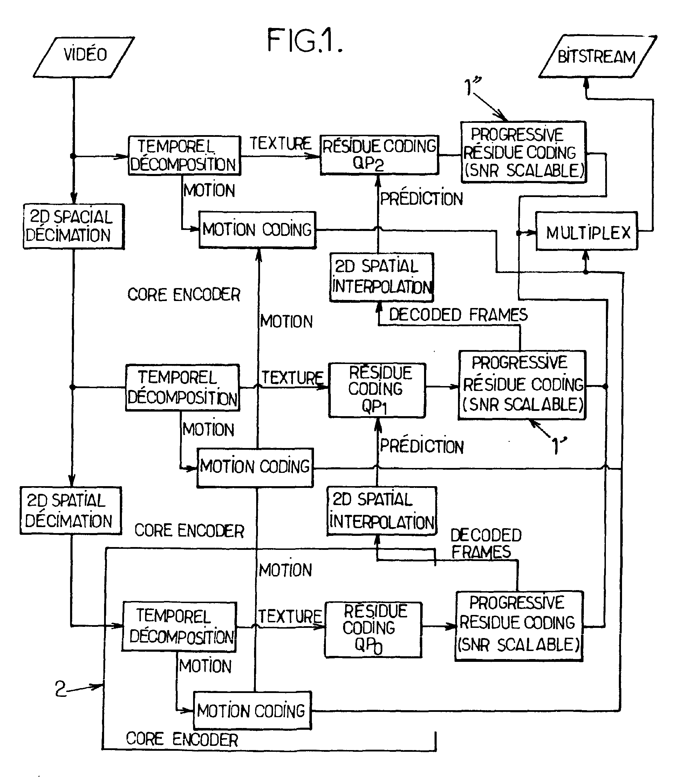

L'encodeur est schématisé à la figure 1. Il comporte deux modes :
a) le mode FGS 1, 1', 1" ou codage par quantification progressive permettant d'atteindre une granularité dite "moyenne" (de l'ordre de 10%). Le codeur enchaîne les étapes suivantes :
   - Codage en 2 d'une version basse résolution de la séquence vidéo. (le niveau de base en quantification de cette basse résolution est compatible AVC).
   - Codage des niveaux supérieurs par prédiction à partir du niveau précédent reconstruit et sur-échantillonné et codage des résidus sous forme :
      ○ D'un niveau de base
      ○ D'un ou plusieurs niveaux de réhaussement obtenus par codage multipasse de plans de bits (par la suite : FGS). Le résidu de prédiction est codé jusqu'à un débit R_ri_max qui correspond au débit maximum décodable pour la résolution ri.
b) le mode CGS ou codage par couches permettant d'atteindre une scalabilité dite grossière (de l'ordre de 25%). Le codeur enchaîne les étapes suivantes :
   - Le niveau de base est codé à une qualité 0 (layer 0, avec QP0)
   - la différence entre les couches est calculée et cette différence est encodée (codage entropique).

Un flux SVC est constitué d'un ensemble de paquets d'information. Ces différents paquets d'information (NAL unit) peuvent être regroupés hiérarchiquement en:
- séquence vidéo: ensemble de paquets d'information représentant une séquence vidéo (ne correspondant pas nécessairement à tout le flux vidéo). Dans les premiers paquets, on retrouve notamment des paquets d'information globale relative à la séquence : paquets de type SPS (Sequence Parameter Set - ensemble de paramètres de séquence), mais aussi des paquets d'information relatifs aux différents type d'images présentes : paquets de type PPS (Picture Parameter Set - ensemble de paramètres d'image)
- Access Unit : ensemble d'information correspondant à un instant temporel. On y retrouve des paquets d'information de type message d'information (SEI - Supplemental Enhancement Information - information d'amélioration supplémentaire), ou bien de données
- Slice: ensemble d'informations codées au sein d'une NAL unit. Une slice regroupe un ensemble de macroblocs d'une image pour un niveau de représentation ou couche (par exemple, niveau de représentation spatial). Par la suite, on appellera slice un groupe de groupe de blocs.
- Macrobloc: ensemble d'informations présente dans un groupe de blocs. Un macrobloc est constitué de 4 blocs 8x8 de luminance et de 2 blocs 8x8 de chrominance (chrominance rouge, chrominance bleu) pour le format de couleur 4:2:0. Par la suite, on appellera macrobloc, un groupe de blocs.
- Bloc: ensemble d'information relatif à un bloc d'image de taille 8x8 ou 4x4.

Il est à noter que dans la suite de ce texte, sauf si le contexte le précise autrement, le terme « groupe de blocs » désigne indifféremment un macrobloc ou une « slice ».

Le flux SVC est organisé en Access units (AU - unité d'accès) correspondant chacune à un instant (temporel) et comprenant une ou plusieurs unités d'accès pour le réseau (paquet) ou NALU (Network Abstraction Layer Units - unités de couche d'abstraction réseau)

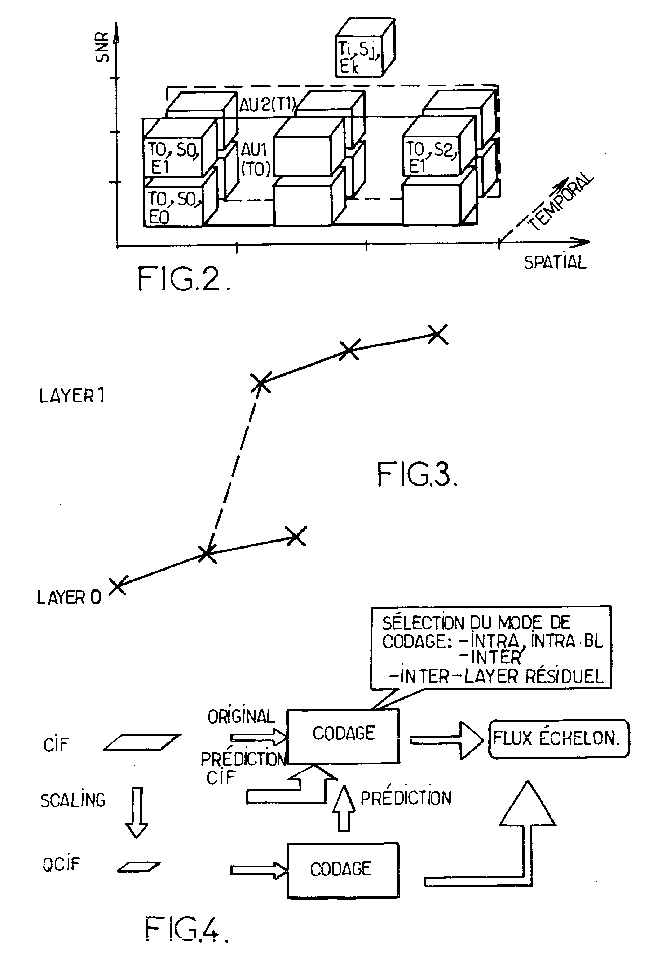

Chaque NALU, figure 2, est associée à une image issue de la décomposition spatio-temporelle Ti, un niveau de résolution spatiale Sj, et un niveau de qualité en quantification SNR Ek. Cette structuration en NALUs permet alors de pouvoir réaliser une adaptation en débit et/ou résolution spatio-temporelle en supprimant les NALUs de résolution spatiale trop grande, ou de fréquence temporelle trop grande ou bien encore de qualité en quantification trop grande.

Chaque NALU encapsule une portion (en anglais « slice ») d'image, la portion d'image pouvant correspondre à tout ou partie de l'image. Comme indiqué précédemment, une « slice » est un ensemble de macroblocs contenu dans une image. On peut retrouver plusieurs slices dans une image (typiquement pour limiter la taille des NALUs, limiter l'impact d'une perte de paquet, réaliser un codage adaptatif par région d'image, etc.

Chaque NALU spécifique à SVC comporte un octet d'en-tête AVC et deux octets* d'en-tête SVC contenant les champs (P,D,T,Q) (Priority_id, Dependency_id, Temporal_level, Quality_level). Ces champs peuvent être exploités pour réaliser une adaptation en résolution spatiale et/ou fréquence temporelle et/ou qualité, en ne retenant que les NALUs ayant un niveau de champs (P,D,T,Q) suffisamment élevé.

Le champ « Priority_id » indique un niveau de priorité d'une NALU pouvant servir à guider une adaptation en qualité.

Le champ « Dependency_id » permet de connaitre le niveau de résolution spatiale d'une couche hiérarchique de codage. Ce niveau peut aussi contrôler un niveau de rehaussement en qualité SNR ou de rehaussement temporel dans le cadre d'un codage en couche, c'est-à-dire pour un nombre de points de fonctionnement discret.

Le champ « Temporal_level » permet d'indiquer le niveau temporel lié à la fréquence d'image.

Le champ « Quality_level » permet d'indiquer le niveau de quantification progressive, et donc de contrôler le débit/qualité et/ou la complexité.

Chaque NALU comporte également dans l'en-tête un champ "discardable_flag" qui indique si l'unité considérée doit être prise en compte pour le décodage du niveau courant seulement ou pour le décodage du niveau courant et du niveau supérieur.

Un flux échelonnable est divisé en couches (en anglais « layer »). Chaque couche est identifiée par l'élément de syntaxe nommé "dependency_id". Pour chaque couche, un niveau de base est codé en mode non progressif avec un pas de quantification initial QP0. Ce niveau de base est identifié à l'intérieur de la couche par l'élément de syntaxe appelé niveau de qualité (quality_level dans la norme) QL0 (c'est-à-dire QL = 0).

Le niveau de base QL0 d'une couche « layer 1 », figure 3, peut être prédit :
- soit par le niveau de base QL0 d'une couche inférieure « layer 0 ». C'est notamment le cas en mode non progressif, puisque dans l'état actuel de la norme, il n'est pas permis d'avoir plusieurs niveaux de qualité (QL) dans une même couche en CGS
- soit par un niveau QLi (c'est-à-dire QL = i) de la couche inférieure (i>=0) en mode progressif ou en mode non progressif CGS en supposant plusieurs niveaux QL en CGS.

Cette prédiction est appelée prédiction « inter-layer » ou prédiction inter-couches.

A l'intérieur de chaque couche, des niveaux de rehaussement QLi du niveau de base QL0 peuvent être codés, ces niveaux de rehaussement sont identifiés par leur niveau de qualité QL. La norme prévoit que ces niveaux de rehaussement sont codés en mode de raffinement progressif - FGS, bien que techniquement, il soit également possible de coder le niveau de rehaussement en mode non progressif CGS. Ces niveaux de prédiction sont codés à l'aide d'une prédiction intra-couche venant du niveau précédent QL0 (niveau de base ou de rehaussement).

En mode dit "single loop" (celui retenu actuellement pour la norme SVC) les blocs d'image d'un niveau N utilisés pour la prédiction du niveau supérieur (N+1) ne sont pas compensés en mouvement. En d'autres termes, ils ne dépendent pas des autres blocs des images environnantes.

Ainsi la compensation de mouvement est réalisée par le décodeur au dernier niveau. Les données résiduelles qui servent à la prédiction sont alors accumulées par macrobloc.

Pour les macroblocs qui n'utilisent pas la prédiction, les blocs correspondants du niveau de base ne sont pas nécessaires. Ainsi tout un ensemble de bloc de niveau N ne sont pas nécessaires au décodage du niveau (N+1). Ces blocs peuvent donc être omis.

Actuellement, les données utiles à la prédiction du niveau supérieur et celles qui ne le sont pas sont codées dans la même slice d'image. Il n'est donc pas possible de les séparer de façon immédiate.

Il existe dans l'art antérieur plusieurs techniques de séparation en plusieurs slices des informations d'un niveau de qualité d'une couche en informations utiles (première slice) et non utiles (seconde slice) à la prédiction de la couche supérieure. Ces méthodes présentent plusieurs problèmes :
- les solutions proposées impliquent pour la plupart des modifications profondes de la syntaxe de la norme AVC/SVC,
- elles proposent un traitement binaire de l'information des (macro)blocs: les macroblocs sont inclus ou exclus de l'une des slices.

Des documents illustrant les techniques connues sont les suivants :
- "Independant parsing of spatial and CGS layers", Schwarz et al, JVT-S069, Avril 2006, Genève (HHI),
"Discardable bits and Multi-layer RD estimation for Single loop decoding", Mathew et al., JVT-R050r1, Jan. 2006, Bangkok,
On discardable lower layer adaptations , Wang et al, JVTS039, Avril 2006, Genève.

Le but de l'invention est de proposer une méthode de codage des données représentatives d'un niveau de qualité d'une couche de données en au moins deux passes qui peuvent être combinées. C'est un objectif de l'invention de résoudre les inconvénients mentionnés ci-dessus en proposant un mécanisme plus souple de répartition dans différentes slices des données de codage tout en respectant la syntaxe de la norme AVC/SVC.

L'invention propose ainsi un procédé de codage selon la revendication 1.

Les avantages d'un tel procédé sont :
- d'avoir une granularité plus fine en débit. Lors d'un codage par slice de type EI, EP, EB (mode non progressif), la granularité est limitée à celle de la slice. Les passes liées aux deux codages permettent alors d'avoir une granularité plus fine,
- d'avoir une meilleure efficacité de compression. Par exemple, il est intéressant de coder un bloc en deux modes de partitionnement venant s'ajouter (i.e. des basses fréquences en mode 16x16, et uniquement des détails hautes fréquences sur l'un des blocs 4x4).

Selon des modes particuliers de réalisation, le procédé peut comprendre les caractéristiques additionnelles des revendications 2 à 4.

Cela permet de s'affranchir, dans un contexte de prédiction inter-couches, de la transmission des informations qui ne sont pas nécessaires au codage des informations de la couche supérieure lorsque l'on souhaite décoder uniquement cette couche.

Cela permet de séparer simplement les informations en plusieurs passes (au moins deux) afin de réaliser par exemple une prédiction inter-couches adaptative réutilisant la syntaxe existante de SVC dans le cadre d'un profil « main », assurant si nécessaire un niveau de qualité minimum pour la reconstruction du niveau de base et/ou assurant si nécessaire la meilleure prédiction pour le niveau supérieur.

Le codage devient plus efficace en compression en simulant, par exemple, un codage multi-couches optimisant le codage de la couche supérieure.

Le codage en plusieurs passes permet également une granularité plus fine en débit via des passes à l'intérieur d'un niveau de qualité d'une couche ainsi qu'une compatibilité accrue avec le parc de décodeurs existant.

L'invention concerne aussi un procédé de décodage selon la revendication 5.

L'invention propose également un dispositif de codage selon la revendication 6.

L'invention propose également un dispositif de décodage selon la revendication 7.

L'invention propose également un signal de transmission d'un flux de données codé par le procédé précédent.

Celui-ci est tel qu'un en-tête de groupe de blocs comporte en outre une information indiquant le type de combinaison à effectuer entre les données codées par les différentes étapes de codage.

L'invention propose également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de codage précédent.

L'invention sera mieux comprise à la lumière de la description et des dessins sur lesquels :
- la figure 1 est un schéma synoptique d'un codeur selon la norme SVC;
- la figure 2 est une représentation symbolique du flux codé selon la norme SVC dans sa décomposition en NALU ;
- la figure 3 est une vue schématique des relations entre la prédiction inter-couche et la prédiction intra-couche dans le projet de norme SVC ;
- la figure 4 est une vue schématique des flux de codage dans la norme SVC ;
- la figure 5 est une vue schématique d'un mode de réalisation de l'invention dans un codage inter-couches comparé à l'art antérieur ;
- la figure 6 est une vue schématique d'un mécanisme de codage par passes d'une couche de rehaussement en quantification selon un mode de réalisation de l'invention ;
- la figure 7 est une vue schématique d'un mécanisme de codage par passes dans le cas d'une prédiction inter-couches selon un autre mode de réalisation de l'invention ; et
- la figure 8 est une vue schématique d'un ordinateur sur lequel peut s'exécuter un programme d'ordinateur pour la mise en oeuvre d'un procédé de codage selon un mode de réalisation de l'invention.

On se place dans le contexte du codage d'une information à l'aide d'une slice de type I, P, B, EI, EP, EB (i.e. slice non progressive) pour un niveau de qualité en quantification (« quality_level ») donné du codeur SVC.

Le codage de cette slice est effectué en plusieurs passes, chaque passe venant rehausser en qualité la passe précédente, tout en restant au même niveau de qualité en quantification "quality_level".

Chaque passe est codée, de façon préférentielle, comme une passe normale AVC/SVC. Les informations obtenues sont alors fusionnées avec les informations de la passe précédente.

Chaque passe de rehaussement, c'est-à-dire ne correspondant pas à la première passe de la slice considérée, est codée comme une slice de type El, EP ou EB. Pour chaque macrobloc, la manière dont les informations nouvellement codées viennent raffiner les informations codées préalablement (par exemple : ajout ou remplacement) est indiquée.

Les passes ne sont donc pas des fragments de passes CGS comme le sont les fragments FGS en mode FGS, puisqu'ils ne représentent pas nécessairement des informations disjointes entre les différentes passes.

Les avantages d'une telle approche sont multiples. L'approche en passes permet :
- de s'affranchir, dans un contexte de prédiction inter-couches, de la transmission des informations qui ne sont pas nécessaires au codage des informations de la couche supérieure lorsque l'on souhaite décoder uniquement cette couche,
- d'avoir une granularité plus fine en débit. Lors d'un codage par slice de type El, EP, EB (mode non progressif), la granularité est limitée à celle de la slice. Les passes permettent alors d'avoir une granularité plus fine.
- d'avoir une meilleure efficacité de compression. Par exemple, il peut être intéressant de coder un bloc en deux modes de partitionnement venant s'ajouter (i.e. des basses fréquences en mode 16x16, et uniquement des détails hautes fréquences sur l'un des blocs 4x4).

Chaque passe de codage aboutit à un ensemble de données combinables. Chaque passe de codage est insérée dans une slice au sens de la syntaxe SVC.

Ainsi, dans le cas de deux passes, les macroblocs de l'image (dont le support correspond à la slice) pourront-ils appartenir partiellement à la première et à la deuxième passe.

Cette répartition des données en deux passes permet alors au décodeur de réaliser une combinaison des informations des deux passes :
- addition des données,
- concaténation des données (dans le domaine DCT par exemple),
- écrasement des données,
- etc.

Il en résulte le codage en plusieurs passes des informations présentes au sein d'une slice en utilisant un codage avec plusieurs slices ayant la même position. Les informations des deux slices seront combinées (selon une méthode éventuellement fournie en option au décodeur).

Cela permet de séparer simplement les informations en plusieurs passes (au moins deux) afin de réaliser par exemple une prédiction inter-couches adaptative réutilisant la syntaxe existante de SVC dans le cadre d'un profil « main », assurant si nécessaire un niveau de qualité minimum pour la reconstruction du niveau de base et/ou assurant si nécessaire la meilleure prédiction pour le niveau supérieur.

Le codage devient plus efficace en compression en simulant, par exemple, un codage multi-couches optimisant le codage de la couche supérieure.

Le codage en plusieurs passes permet également une granularité plus fine en débit via des passes à l'intérieur d'un niveau de qualité d'une couche ainsi qu'une compatibilité avec le parc de décodeurs existant.

Dans une implémentation simple de ce codage avec deux passes dans SVC, dans le cadre de l'ILP, la première passe est considérée comme "non discardable" au sens de la syntaxe SVC ; le flag n'est pas monté. Elle contient toutes les informations qui seront décodées par un décodeur qui travaille à une résolution supérieure à celle du niveau courant.

La seconde passe est considérée comme "discardable" au sens de la syntaxe SVC (le flag "discardable" est monté). Elle contient toutes les informations qui ne seront décodées que par un décodeur qui travaille à la résolution de la couche courante. Elle peut donc être omise par un décodeur travaillant à une résolution supérieure.

Macrobloc par macrobloc, on peut envisager alors de faire une simple addition des données résiduelles des deux macroblocs ou bien d'écraser les données de la première passe par la seconde, ou etc.

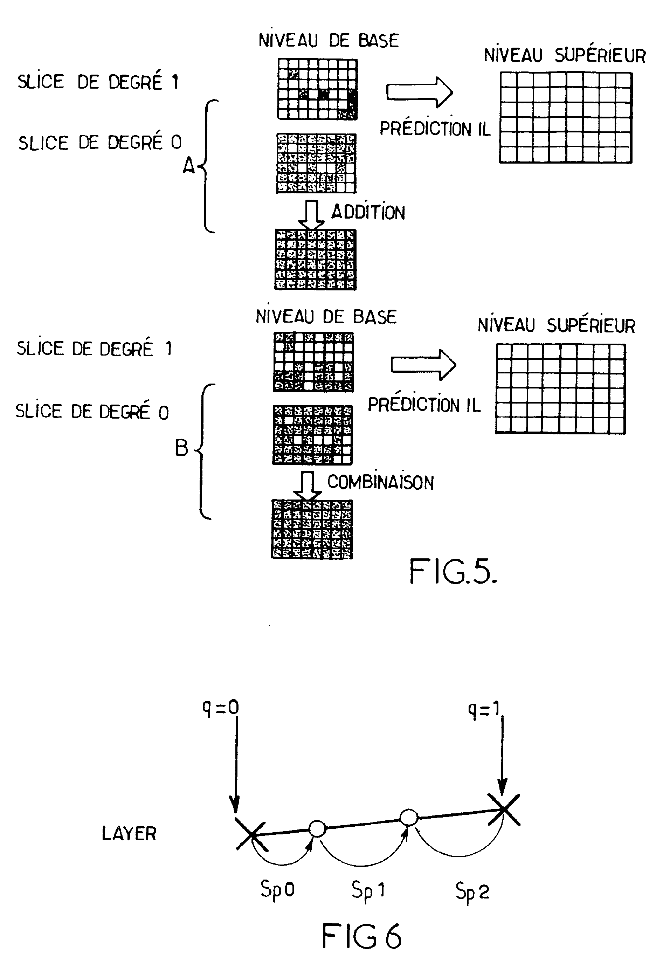

La figure 5 représente une vue schématique de l'invention appliquée au codage inter-couches. En partie A, un macrobloc est codé (blocs gris) ou n'est pas codé (blocs blancs). Cela correspond à l'art antérieur. En partie B est représentée l'approche par passes de codage : un macrobloc peut être partiellement codé (blocs blancs) ou totalement codé (blocs gris).

Le procédé de codage d'une image ou d'une séquence d'images génère un flux de données sous forme de groupes de blocs, au moins un groupe de blocs regroupant des blocs d'image ayant une résolution et un niveau de qualité en quantification identique. Le procédé comporte au moins les étapes suivantes, pour le au moins un groupe de blocs, de
a. un premier codage adapté pour que chaque bloc du au moins un groupe de blocs ait au moins un paramètre associé renseigné par une première valeur, et
b. un second codage adapté pour renseigner ce paramètre associé pour au moins un bloc du au moins un groupe de blocs par une seconde valeur,
de telle sorte que pour ledit au moins un bloc, les première et seconde valeurs renseignées pour ledit paramètre sont combinables lors du décodage pour fournir une valeur attribuée audit paramètre.

Chaque étape de codage est également appelée « passe ».

On envisage plusieurs modes.

Un premier mode consiste dans l'addition des valeurs renseignées lors des passes.

Un deuxième mode consiste dans la combinaison adaptative des valeurs renseignées lors des passes par addition ou substitution avec signalisation du type de combinaison au niveau de blocs, groupes de blocs (macroblocs) ou groupes de groupes de blocs (Slice).

Un troisième mode consiste dans la définition, dans un mode additif, d'un coefficient à atteindre pour la passe (concaténation de données). Le signal de fin de bloc (EOB) devient alors facultatif.

Les informations de combinaison peuvent être portées par l'en-tête de slice, de macrobloc ou par le PPS ou par le SPS.

De manière préférentielle, on procède de la manière suivante :

Dans le contexte de prédiction inter-couches, on encode deux couches d'informations N et (N+1). Les informations (coefficients) de niveau de quantification L de la couche N sont réparties dans les slices 1 (première passe) et 2 (deuxième passe).

Dans la slice 1 sont rangés les coefficients des macroblocs calculés lors d'une première phase de codage, qui seront utilisés pour la prédiction du niveau N+1. Il peut s'agir de données vides (skip de macrobloc) pour une partie au moins des données (texture et/ou mouvement) ou bien ce sont les "meilleurs" coefficients conformément à un critère de qualité. Dans ce dernier cas, de manière préférentielle, il s'agit des coefficients des blocs sous-échantillonnés du niveau N+1. Il peut s'agir aussi des coefficients issus du niveau N fournissant la meilleure prédiction de niveau N+1 (calculés au sens d'un critère débit distorsion, par exemple) ou de tous les coefficients du bloc au niveau N ou de ceux qui donnent une qualité minimale sur le niveau de base (il s'agit par exemple d'assurer une qualité minimale AVC).

On positionne pour cette slice l'indicateur de données utiles (non-discardable) à 0. On remarque que, s'il s'agit de données AVC, cette étape sera a priori omise.

On range dans la slice 2 les coefficients de la seconde passe de codage. Par exemple, il s'agit des coefficients qui ne seront pas utilisés pour la prédiction du niveau N+1 (DS =1). Il peut s'agir des données vides (skip de macrobloc) ou d'un complément des données du macrobloc de même position dans la slice 1 ou des "meilleures" coefficients conformément à un critère de qualité SNR pour le codage du niveau N.

On positionne pour cette slice l'indicateur de données utiles (discardable) à 1.

On encode pour cette slice 2 un mode de combinaison : addition, remplacement ou combinaison ou etc. Ce mode est placé, de manière préférentielle, dans l'en-tête de chaque macrobloc, bien qu'il puisse être placé également dans l'en-tête de la slice (indiquant ainsi un même type d'opération pour tous les macroblocs de la slice), ou dans le SPS, etc.

Dans le contexte multi-passes sans notion de prédiction inter-couches, on s'intéresse à l'encodage d'une seule couche d'informations N. Les informations (coefficients) du niveau de qualité en quantification L pour une couche N sont réparties dans K slices pour au moins une unité d'accès AU :
La première passe consiste dans le traitement de la slice 1. On range dans celle-ci les coefficients des macroblocs calculés lors de la première passe de codage. Ce sont de préférence les "meilleurs" coefficients pour la passe conformément à un critère de qualité. Par exemple, on place en compétition toutes les combinaisons possibles de tailles de blocs et DCT associées (16x16, 8x8, 4x4) du macrobloc et on conserve la meilleure combinaison au sens débit-distorsion pour une certaine qualité.

La i^{ième} passe consiste dans le traitement de la slice i, 2<i<K. On range dans la slice i les coefficients de la i^{ième} phase de codage. Ce sont des données vides si une qualité suffisante est atteinte ou un complément des données du macrobloc de même position que dans la slice 1. De manière préférentielle, le complément raffine les données sur un support différent. Par exemple, complément DCT sur des blocs 4x4 quand le codage s'est effectué sur des blocs 8x8 dans la slice précédente.

On encode un mode de combinaison : addition, remplacement ou combinaison ou raffinement de la partition ou etc. Le numéro de passe est également encodé. Le mode est placé, de manière préférentielle, dans l'en-tête de chaque macrobloc, bien qu'il puisse être placé également dans l'en-tête de la slice (indiquant ainsi un même type d'opération pour tous les macroblocs de la slice), ou dans le SPS, etc. Le numéro de passe est placé, de manière préférentielle, dans l'en-tête de chaque slice.

Un mode particulier de réalisation va maintenant être décrit.

La Figure 6 illustre le principe d'un codage d'un niveau de rehaussement en quantification par l'intermédiaire de passes. Le niveau de rehaussement en quantification ayant le niveau de qualité (quality_level) 1 est codé en plusieurs sous-passes sp0, sp1 et sp2. Le codage d'un niveau de rehaussement en quantification en passes peut être effectué sur tout niveau de rehaussement en quantification, y compris le premier niveau (encore appelé niveau de base et pour lequel on a quality_level = 0). Chaque passe est ainsi codée dans le contexte de SVC par une NAL unit.

Dans une variante, une NAL unit peut contenir au moins une passe de rehaussement en quantification. Dans cette variante, il peut alors être possible de réaliser une troncation d'une NAL unit codée en mode CGS.

Ce codage en passe d'un niveau de rehaussement en quantification est réalisé pour au moins une unité de donnée à l'intérieur d'une couche de représentation pour au moins une unité d'accès AU.

Le codage d'un niveau de rehaussement en quantification est alors le suivant :
- établissement du nombre de passes utilisées, et définition des données à coder au sein des différentes passes,
- boucle de codage des différentes passes de rehaussement en quantification. Pour chaque passe :
   ○ codage des informations de signalisation de la passe.
   ○ codage des données liées à la passe courante.

La définition du nombre de passes de codage ainsi que des données à coder au sein de chaque passes dépend du mode particulier de réalisation utilisé. Par la suite, nous illustrerons différents types de mode particuliers (et non limitatifs) de définition des passes.

Dans un mode privilégié, le codage des informations de signalisation de la passe de rehaussement en quantification consiste à identifier l'indice de la passe de quantification (sub_quality_level_idx) et un indicateur de dernière passe (last_sub_quality_level_flag). Les modifications de syntaxe pour SVC sont présentées en annexe 1. Ces informations de signalisation sont insérées dans l'en-tête des slices de données SVC.

On notera que ces modifications de syntaxe sont proposées ici à titre indicatif. Quelques restrictions supplémentaires (notamment des restrictions de syntaxe en fonction du numéro de passe, de manière similaire au numéro de fragment) peuvent être ajustées pour une implémentation efficace.

Dans ce mode, le codage des données liées à chaque passe est réalisé de façon similaire à SVC. Toutes les données des blocs codés dans un groupe de groupe de blocs (i.e. slice dans la terminologie SVC) sont codées. Ainsi, le codage de la première passe reste compatible avec un décodeur de base (par exemple un décodeur AVC pour la première passe de la première couche de représentation d'un flux SVC, ou bien de façon plus générale pour un décodeur implémentant un niveau de profil bas).

Optionnellement, des informations de type de combinaison des informations codées au sein des différentes passes sont définies.

Le mode privilégié de l'invention est de considérer que les informations codées au sein des différentes passes sont à ajouter les unes aux autres.

Dans une variante, on peut réutiliser les champs de prédiction adaptative inter-couches pour utiliser un mode de combinaison du type substitution (les données d'une passe viennent écraser les données définies dans la ou les passes précédentes). Ce type de combinaison peut être signalé au niveau de chaque bloc, groupe de bloc ou groupe de groupe de bloc (mode privilégié: au niveau du groupe de bloc ou macro bloc).

Dans une autre variante, les informations codées dans une passe sont à interpréter comme des coefficients venant compléter les coefficients déjà codés, et sont donc à concaténer à la liste des coefficients déjà codé dans la ou les passes précédentes. Il est à noter que, du fait du codage des coefficients par scanning de type zig-zag, une première passe peut coder un premier groupe de coefficients dans l'ordre des parcours et la seconde passe code alors un groupe de coefficients apparaissant à la suite dans l'ordre de parcours.

Un mode de réalisation du codage en passes pour la prédiction inter-couches va maintenant être présenté.

Dans ce mode de réalisation, un niveau de rehaussement en quantification est codé en deux passes afin de définir des données dites "utiles" à la prédiction inter-couches, et des données dites "non utiles".

Du fait de l'utilisation d'un mode de prédiction inter-couche adaptatif, lors du codage d'une couche de représentation d'un niveau supérieur, on indique pour chaque bloc si l'information provenant de la couche servant à la prédiction est utilisée ou non. Dans le cas de la non-utilisation de l'information associé à un bloc de la couche servant à la prédiction, cette information sera alors appelée information "non-utile". Elle pourra être ignorée par un décodeur travaillant à une résolution supérieure à celle de la couche de prédiction.

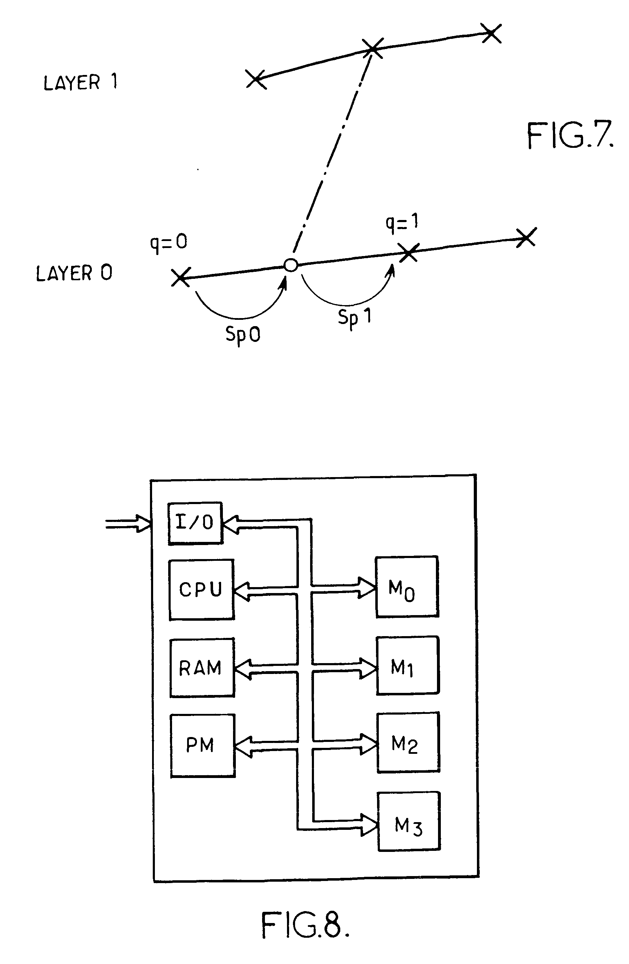

La Figure 7 illustre ce mode de réalisation. Les informations dites utiles sont codées dans la passe intitulée "sp0". Les informations dites "non-utiles" sont codées dans la passe intitulée "sp1". Avantageusement, la première passe est alors marquée comme "non-discardable", alors que la deuxième passe est marquée comme "discardable" (signalisation faite via l'élément de syntaxe "DS_flag" défini en entête de chaque NAL SVC).

Dans une variante, le mécanisme de prédiction inter-couches défini actuellement dans SVC peut être adapté pour prendre en compte le concept de passes de codage.

L'élément de syntaxe "fragment_order_base" utilisé actuellement pour identifier le numéro de fragment d'une passe FGS utilisé comme point de référence pour la prédiction inter-couche, sera alors à interpréter comme étant le numéro de passe définissant le point de référence pour la prédiction inter-couche.

Le nouvel élément de syntaxe "sub_quality_level_idx" peut être utilisé aux mêmes fins dans le cas d'une NAL CGS (non progressive).

On peut noter que dans le mode privilégié de réalisation décrit dans cette section, il n'est pas nécessaire de décrire quelle passe définit le point de prédiction, car l'élément syntaxique "DS_flag"' indique si une unité de donnée est utilisée ou non pour la prédiction inter couche.

Dans un mode privilégié de réalisation, le partitionnement informations utiles/informations non utiles est réalisé bloc par bloc. Si un bloc est jugé utile, ses informations sont codées dans la première passe et l'on code par la suite une valeur nulle de remise à jour dans la seconde passe. Si un bloc est jugé non utile, on code alors une information minimale dans la première passe (typiquement un ensemble de valeurs d'information nulles), et l'on code l'information restante dans la seconde passe.

Dans une variante, l'information minimale codée pour les blocs non utiles sera défini afin d'atteindre une qualité minimale de reconstruction lors d'un décodage n'ayant que la première passe (par exemple, en ne codant que les informations de mouvement).

Dans une variante, le partitionnement des informations utiles/non utiles peut se faire par sélection adaptative des coefficients à conserver au sein d'un bloc (sélection réalisée par exemple au sens d'un critère d'efficacité de compression associé à la couche supérieure).

Dans une variante, les informations dites utiles sont définies par l'intermédiaire des informations à coder dans la couche supérieure (par exemple, par sous-échantillonnage des informations à coder dans la couche supérieure); les informations codées dans la seconde passe correspondant alors aux informations permettant, suite à une combinaison avec les informations de la première passe, d'avoir une bonne reconstruction de la couche de représentation de base.

Le déroulement de ce mode de réalisation est alors le suivant:
- définition des informations dites utiles à la prédiction inter-couche,
- codage dans une première passe de rehaussement en quantification des informations dites utiles à la prédiction inter-couche,
- codage dans une seconde passe de rehaussement en quantification des informations restantes.

Ce mécanisme de répartition des données peut s'appliquer à n'importe quel niveau de rehaussement en quantification (y compris le niveau de base), et peut s'appliquer sur plusieurs niveaux de quantification simultanément.

Dans un second mode de réalisation, le codage en passes est utilisé pour augmenter la finesse de granularité en débit.

Dans ce mode de réalisation, un codage en plusieurs sous-couches de rehaussement en quantification est réalisé pour un niveau de rehaussement en quantification afin de limiter le "saut" en débit lié à ce niveau de quantification.

Un mode privilégié de réalisation est de définir pour chaque passe un ensemble minimal de coefficients à coder. Cet ensemble minimal de coefficients peut être défini comme étant les coefficients compris entre deux positions dans l'ordre de parcours des coefficients au sein des blocs. Cet ensemble minimal peut également être défini via une position minimale à atteindre dans l'ordre de parcours des coefficients au sein de chaque bloc. Si la position a déjà été atteinte lors d'un codage précédent, alors on code une information indiquant un rehaussement nul pour ce bloc.

L'information de position à atteindre peut être signalée en en-tête du codage d'un groupe de blocs, ce qui peut alors permettre de ne pas coder dans certains cas des informations de fin de bloc. Dans une variante, aucune information de position n'est codée, nécessitant pour chaque bloc de coder un critère de terminaison.

Une variante de ce mode de réalisation est de définir dans un premier temps un ensemble de valeurs à coder pour le niveau de rehaussement en quantification considéré. Par la suite, ces différentes informations sont réparties au sens d'un critère débit distorsion à travers les différentes passes. Typiquement, les informations à coder au sein d'un bloc pour un niveau de rehaussement en quantification sont définies via la minimisation d'un critère de type R+λ_{QP(QL)}D(QP(QL) correspondant au paramètre de quantification du rehaussement du niveau QL, R correspondant au débit et D à la distorsion). La répartition de ces informations au sein des différentes passes peut alors être réalisée en utilisant des points intermédiaires optimisés au sens débit distorsion. A chaque passe est associé un lagrangien par décalage du pas de quantification: λₛₚ₍ᵢ₎ = I_{QP(QL)-ΔQP(i)}, puis on définit pour chaque passe quel est le sous-ensemble des coefficients à retenir pour minimiser le compromis débit distorsion R(sp(i)) + λₛₚ₍ⱼ₎ D(sp(i)).

Un autre mode de réalisation est d'utiliser un pas de quantification différent pour au moins deux passes d'un niveau de quantification. Typiquement, un niveau de quantification est défini en utilisant le paramètre de quantification QP du niveau précédent et en le diminuant de 6 (i.e. ce qui revient à diviser par deux le pas de quantification utilisé). Les passes intermédiaires peuvent alors être associées à l'utilisation de pas de quantification intermédiaire.

Dans un troisième mode de réalisation de codage en passes, celui-ci est utilisé pour augmenter l'efficacité en compression.

Dans SVC, plusieurs modes de codage des informations de résidu sont disponibles (transformation 4x4, transformation 8x8), et un choix est réalisé pour chaque bloc afin d'utiliser le mode de codage le plus adapté. Dans certaines situations, il peut toutefois être intéressant d'utiliser plusieurs modes de codage pour un même bloc d'information à coder. Ainsi par exemple, il peut être avantageux de coder une première version grossière du signal en utilisant un mode de représentation basé sur une transformation 8x8, puis de coder une information additionnelle à l'aide d'une transformation 4x4.

Le décodage d'une représentation par passes d'un niveau de rehaussement en quantification est le suivant :
- boucle sur les différentes passes du niveau de rehaussement en quantification. Et, pour chaque passe :
   ○ lecture des informations codées dans la passe
   ○ combinaison des informations décodées avec les informations préalablement décodées.

Dans un mode de réalisation, les informations codées dans les différentes passes étant codées avec la syntaxe actuelle de SVC, leur décodage est similaire au décodage des informations d'un niveau de rehaussement en qualité, à l'exception de la lecture de l'indicateur d'indice de passe et de l'indicateur de dernière passe (informations utiles pour identifier l'ordre relatif de décodage des différentes passes).

Suivant les différentes variantes proposées de réalisation, différentes informations additionnelles peuvent être lues et utilisées dans le processus de décodage:
- information du type de combinaison à effectuer entre les différentes passes (par exemple, addition, substitution, concaténation à la série de coefficients préalablement codés,...). Les champs de prédiction inter-layer actuellement présents dans SVC au niveau des en-têtes de bloc, de groupe de blocs et de groupe de groupe de blocs peuvent être réutilisés tels quels pour dissocier le mode de combinaison additive par rapport au mode de combinaison substitutive. Dans le cas de l'utilisation d'un mode de combinaison de type concaténation, la dynamique des éléments de syntaxe utilisé pour contrôler le mode de combinaison est alors étendu afin de proposer une autre alternative (l'élément de syntaxe res_pred_flag qui était codé sur un bit est alors codé sur 2 bits afin d'étendre le nombre de modes de combinaison possibles).
- Dans un mode particulier de réalisation, l'une de ces combinaisons sera prise comme combinaison privilégiée, ne nécessitant pas alors la signalisation du type de combinaison utilisée. Par exemple, on peut envisager que seul le mode de combinaison additive est utilisé.

Un dispositif de codage d'une image ou d'une séquence d'images génère un flux de données sous forme de groupes de blocs, au moins un groupe de blocs regroupant des blocs d'image ayant une résolution et un niveau de qualité en quantification identique. Le dispositif comporte au moins les moyens, pour le au moins un groupe de blocs, de
a. un premier codage adapté pour que chaque bloc du au moins un groupe de blocs ait au moins un paramètre associé renseigné, et
b. un second codage adapté pour renseigner le paramètre associé pour au moins un bloc du au moins un groupe de blocs,
de telle sorte que pour ledit au moins un bloc, les première et seconde valeurs renseignées pour ledit paramètre sont combinables lors du décodage pour fournir une valeur attribuée audit paramètre.

Pour le décodage d'une image ou d'une séquence d'images provenant d'un flux de données sous forme de groupes de blocs, au moins un groupe de blocs regroupant des blocs d'image ayant une résolution et un niveau de qualité en quantification identique, générée par le procédé de codage en passes, un dispositif de décodage comporte au moins les moyens, pour le au moins un groupe de blocs, de
a. un premier décodage des valeurs renseignées par le premier codage pour le paramètre associé pour chaque bloc du groupe de blocs, et
b. un second décodage des valeurs renseignées par le second codage pour au moins un bloc du groupe de blocs,
de telle sorte que la valeur attribuée à chaque bloc du groupe de blocs pour ce paramètre est une combinaison des valeurs décodées pour celui-ci par le premier et le second décodage.

Le flux de données ainsi codé est transmis par un signal de transmission.

Celui-ci est tel qu'un en-tête de groupe de blocs comporte en outre une information indiquant le type de combinaison à effectuer entre les valeurs renseignées par les différentes étapes de codage.

On comprend que le procédé de codage peut être mis en oeuvre par un produit programme d'ordinateur téléchargeable depuis un réseau de communication et/ou enregistré sur un support lisible par ordinateur et/ou exécutable par un processeur tel que représenté sur la figure 88 et comportant une unité arithmétique et logique CPU, différents mémoires RAM et registres M0, M1, M2, M3 ainsi que des entrées/sorties I/O.

### Annexe 1

### Eléments de syntaxe du Joint Document 6 (projet de norme SVC) Slice layer in scalable extension syntax

Dans la suite, on propose une syntaxe pour l'invention, basée sur la syntaxe existante du Joint Document 6

Les champs nouveaux sont surlignés et mis en gras surligné.

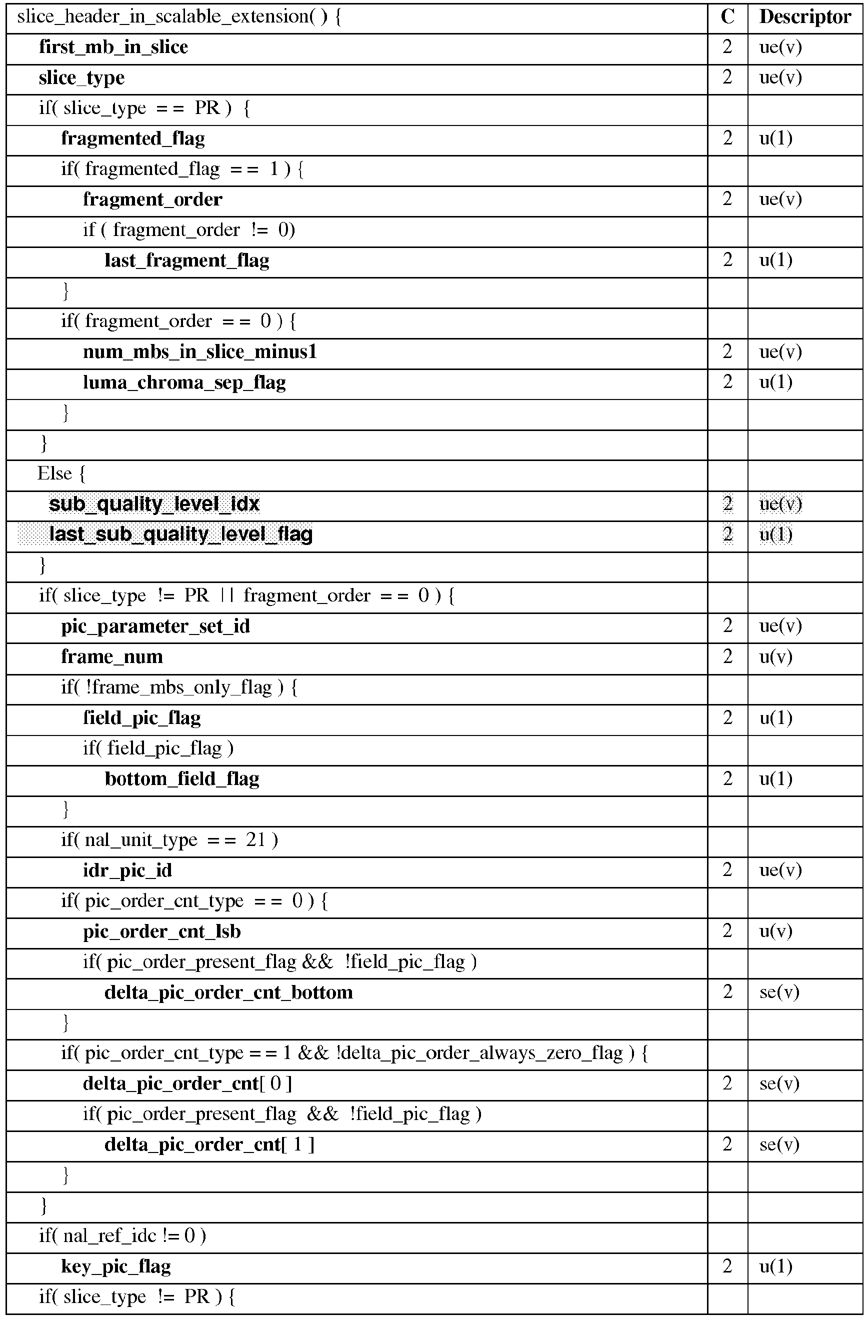

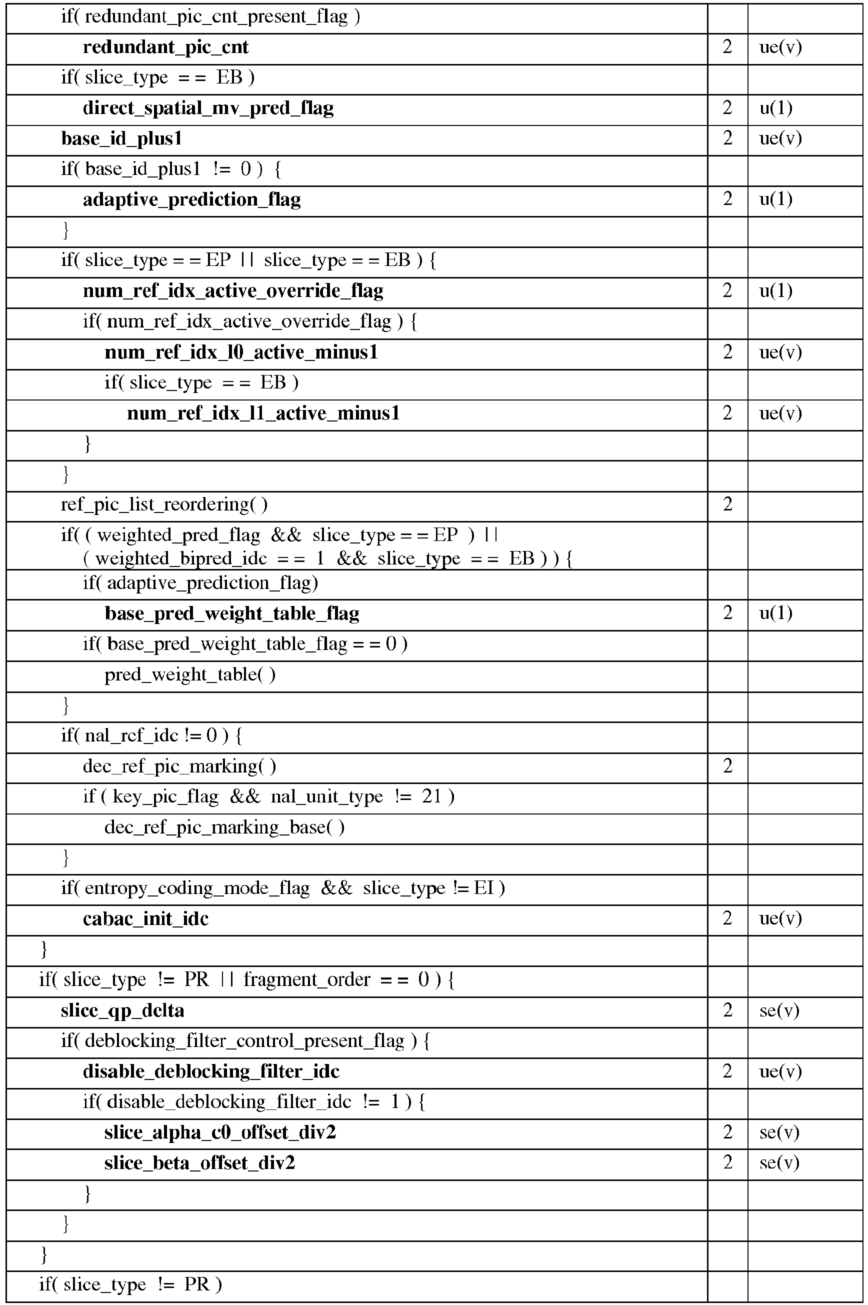

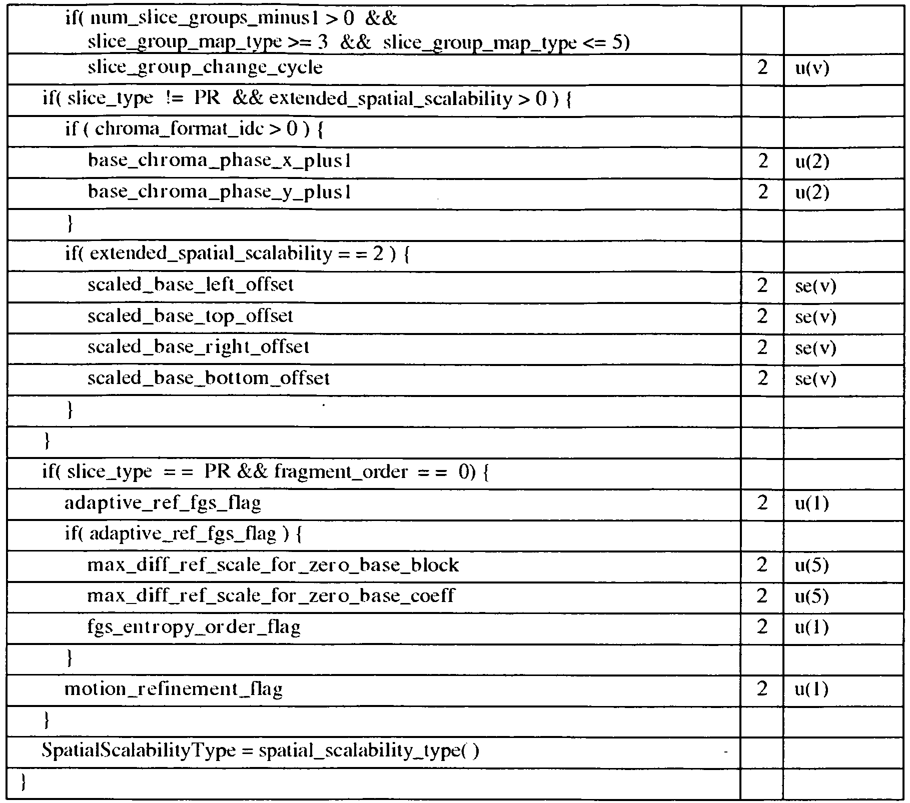

## Revendications

1. Procédé de codage d'une image ou d'une séquence d'images générant un flux de données sous forme de groupes de blocs, au moins un groupe de blocs regroupant des blocs d'image ayant une résolution et un niveau de qualité en quantification identiques, **caractérisé en ce que** ledit procédé comprend, pour le codage dudit au moins un groupe de blocs à ladite résolution et audit niveau de qualité en quantification, un nombre de passes de codage supérieur ou égal à deux, une première passe correspondant à une première étape de codage adaptée pour générer, pour chaque bloc du au moins un groupe de blocs, des données codées utiles pour une prédiction d'un niveau de qualité en quantification supérieur, les données non utiles pour une prédiction d'un niveau de qualité en quantification supérieur pour au moins un bloc dudit au moins un groupe de blocs étant codées au cours d'au moins une autre passe,
de telle sorte que pour au moins un bloc dudit au moins un groupe de blocs, les données codées au cours des passes sont combinables lors du décodage pour fournir un décodage dudit bloc,
le procédé comprenant en outre l'insertion de chaque passe de codage dans une slice au sens de la syntaxe SVC.

2. Procédé de codage selon la revendication 1, **caractérisé en ce que** les données codées au cours des passes sont combinables de telle sorte que la combinaison des données codées correspond à une addition de celles-ci.

3. Procédé de codage selon la revendication 1, **caractérisé en ce que** les données codées sont combinables de telle sorte que la combinaison des données codées correspond à une substitution des données codées par le premier codage par les données codées par le second codage.

4. Procédé de codage selon l'une quelconque des revendications précédentes, **caractérisé en ce que**, les groupes de blocs du flux de données présentant une structure hiérarchique de couches de données emboîtées de niveaux n successifs, où n est entier, chacune des dites couches correspondant à une résolution et à une gamme de niveaux de qualité d'encodage prédéterminées desdits groupes de blocs tel que la résolution et/ou le niveau de qualité d'encodage soit croissant avec l'augmentation dans l'ordre des couches, au moins une couche n + 1 codée par prédiction à partir de la couche inférieure n, le codage par prédiction de la couche supérieure n'utilise que les données codées pendant la première étape de codage.

5. Procédé de décodage d'une image ou d'une séquence d'images provenant d'un flux de données sous forme de groupes de blocs, au moins un groupe de blocs regroupant des blocs d'image ayant une résolution et un niveau de qualité en quantification identiques, ledit flux comportant, pour chaque bloc du au moins un groupe de blocs, des données codées par au moins deux passes, chaque passe de codage étant insérée dans une slice au sens de la syntaxe SVC,
**caractérisé en ce que**, une première passe correspondant à une première étape de codage étant menée lors du codage de données et étant adaptée pour générer des données codées utiles pour une prédiction d'un niveau de qualité en quantification supérieur, des données non utiles pour une prédiction d'un niveau de qualité en quantification supérieur pour au moins un bloc dudit au moins un groupe de blocs étant codées au cours d'au moins une autre passe,
ledit procédé de décodage comprend, pour le décodage dudit au moins un groupe de blocs à ladite résolution et audit niveau de qualité en quantification, pour chaque passe, pour le au moins un groupe de blocs, au moins une étape de décodage des données codées pour chaque bloc dudit groupe de blocs,
de telle sorte que pour au moins un bloc dudit groupe de blocs, le décodage dudit bloc est une combinaison des données décodées pour celui-ci par les étapes de décodage liées à chaque passe.

6. Dispositif de codage d'une image ou d'une séquence d'images générant un flux de données sous forme de groupes de blocs, au moins un groupe de blocs regroupant des blocs d'image ayant une résolution et un niveau de qualité en quantification identiques, **caractérisé en ce que** ledit dispositif comporte, pour le codage dudit au moins un groupe de blocs à ladite résolution et audit niveau de qualité en quantification, pour un nombre de passes supérieur ou égal à deux, au moins les moyens suivants :
pour le au moins un groupe de blocs, au moins des moyens de codage adaptés pour générer, au cours d'une première passe correspondant à une première étape de codage, pour chaque bloc du au moins un groupe de blocs, des données codées utiles pour une prédiction d'un niveau de qualité en quantification supérieur, des données non utiles pour une prédiction d'un niveau de qualité en quantification supérieur étant codées au cours d'au moins une autre passe,
de telle sorte que pour au moins un bloc dudit au moins un groupe de blocs, les données codées au cours des passes sont combinables lors du décodage pour fournir un décodage dudit bloc,
des moyens d'insertion de chaque passe de codage dans une slice au sens de la syntaxe SVC.

7. Dispositif de décodage d'une image ou d'une séquence d'images provenant d'un flux de données sous forme de groupes de blocs, au moins un groupe de blocs regroupant des blocs d'image ayant une résolution et un niveau de qualité en quantification identiques, ledit flux comportant, pour chaque bloc du au moins un groupe de blocs, des données codées par au moins deux passes, chaque passe de codage étant insérée dans une slice au sens de la syntaxe SVC,,
**caractérisé en ce que**, une première passe correspondant à une première étape de codage étant menée lors du codage de données et étant adaptée pour générer des données codées utiles pour une prédiction d'un niveau de qualité en quantification supérieur, des données non utiles pour une prédiction d'un niveau de qualité en quantification supérieur pour au moins un bloc dudit au moins un groupe de blocs étant codées au cours d'au moins une autre passe,
ledit dispositif comporte, pour le décodage dudit au moins un groupe de blocs à ladite résolution et audit niveau de qualité en quantification, pour chaque bloc dudit au moins un groupe de blocs, pour chaque passe, des moyens de décodage des données codées dans la passe, de telle sorte que pour au moins un bloc dudit au moins un groupe de blocs, le décodage dudit bloc est une combinaison des données décodées pour celui-ci par les moyens de décodage liées à chaque passe.

8. Signal de transmission d'un flux de données codé par le procédé selon l'une des revendications 1 à 4, **caractérisé en ce qu'**un en-tête de groupe de blocs comporte en outre une information indiquant le type de combinaison à effectuer entre les données codées par les différentes étapes de codage.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de codage selon l'une au moins des revendications 1 à 4.

## Patentansprüche

1. Verfahren zum Codieren eines Bildes oder einer Folge von Bildern, das einen Datenstrom in Form von Gruppen von Blöcken erzeugt, wobei wenigstens eine Gruppe von Blöcken Bildblöcke, die die gleiche Auflösung und das gleiche quantifizierte Qualitätsniveau haben, umgruppiert, **dadurch gekennzeichnet, dass** das Verfahren für die Codierung der wenigstens einen Gruppe von Blöcken mit dieser Auflösung und diesem quantifizierten Qualitätsniveau eine Anzahl von Codierungsdurchläufen, die größer oder gleich zwei ist, umfasst, wobei ein erster Durchlauf einem ersten Codierungsschritt entspricht, der dafür ausgelegt ist, für jeden Block der wenigstens einen Gruppe von Blöcken codierte Daten, die für eine Prädiktion eines höheren quantifizierten Qualitätsniveaus nützlich sind, zu erzeugen, wobei die für eine Prädiktion eines höheren quantifizierten Qualitätsniveaus nicht nützlichen Daten für wenigstens einen Block der wenigstens einen Gruppe von Blöcken während wenigstens eines anderen Durchlaufs codiert werden,
derart, dass für wenigstens einen Block der wenigstens einen Gruppe von Blöcken die während der Durchläufe codierten Daten bei einer Decodierung kombinierbar sind, um eine Decodierung des Blocks zu liefern,
wobei das Verfahren außerdem das Einfügen jedes Codierungsdurchlaufs in einen Slice im Sinne der SVC-Syntax umfasst.

2. Codierungsverfahren nach Anspruch 1, **dadurch gekennzeichnet, dass** die während der Durchläufe codierten Daten derart kombinierbar sind, dass die Kombination der codierten Daten einer Addition dieser Daten entspricht.

3. Codierungsverfahren nach Anspruch 1, **dadurch gekennzeichnet, dass** die codierten Daten derart kombinierbar sind, dass die Kombination der codierten Daten einer Substitution der durch die erste Codierung codierten Daten durch die durch die zweite Codierung codierten Daten entspricht.

4. Codierungsverfahren nach einem der vorhergehenden Ansprüche, **dadurch gekennzeichnet, dass** dann, wenn die Gruppen von Blöcken des Datenstroms eine hierarchische Struktur von Schichten von darin enthaltenen Daten mit n aufeinander folgenden Niveaus aufweisen, wobei n eine ganze Zahl ist, wobei jede dieser Schichten einer vorgegebenen Auflösung und einem vorgegebenen Bereich von Codierungsqualitätsniveaus der Gruppen von Blöcken entspricht, derart, dass die Auflösung und/oder das Codierungsqualitätsniveau mit zunehmender Ordnung der Schichten zunimmt, und dann, wenn wenigstens eine Schicht n + 1 durch Prädiktion anhand der niedrigeren Schicht n codiert wird, die Codierung durch Prädiktion der höheren Schicht nur die während des ersten Codierungsschrittes codierten Daten verwendet.

5. Verfahren zum Decodieren eines Bildes oder einer Folge von Bildern, die aus einem Datenstrom in Form von Gruppen von Blöcken hervorgehen, wobei wenigstens eine Gruppe von Blöcken Bildblöcke, die die gleiche Auflösung und das gleiche quantifizierte Qualitätsniveau haben, umgruppiert, wobei der Strom für jeden Block der wenigstens einen Gruppe von Blöcken Daten enthält, die durch wenigstens zwei Durchläufe codiert sind, wobei jeder Codierungsdurchlauf in einen Slice im Sinne der SVC-Syntax eingefügt wird,
**dadurch gekennzeichnet, dass** ein erster Durchlauf, der einem ersten Codierungsschritt entspricht, bei der Codierung der Daten ausgeführt wird und dafür ausgelegt ist, codierte Daten, die für eine Prädiktion eines höheren quantifizierten Qualitätsniveaus nützlich sind, zu erzeugen, wobei Daten, die für eine Prädiktion eines höheren quantifizierten Qualitätsniveaus für wenigstens einen Block der wenigstens einen Gruppe von Blöcken nicht nützlich sind, während wenigstens eines anderen Durchlaufs codiert werden,
das Decodierungsverfahren für die Decodierung der wenigstens einen Gruppe von Blöcken mit dieser Auflösung und diesem quantifizierten Qualitätsniveau für jeden Durchgang und für die wenigstens eine Gruppe von Blöcken wenigstens einen Schritt des Decodierens der codierten Daten für jeden Block der Gruppe von Blöcken umfasst,
derart, dass für wenigstens einen Block der Gruppe von Blöcken die Decodierung des Blocks eine Kombination von Daten ist, die hierfür von den auf jeden Durchlauf bezogenen Decodierungsschritten decodiert werden.

6. Vorrichtung zum Codieren eines Bildes oder einer Folge von Bildern, die einen Datenstrom in Form von Gruppen von Blöcken erzeugt, wobei wenigstens eine Gruppe von Blöcken Bildblöcke, die die gleiche Auflösung und das gleiche quantifizierte Qualitätsniveau haben, umgruppiert, **dadurch gekennzeichnet, dass** die Vorrichtung für die Codierung der wenigstens einen Gruppe von Blöcken mit dieser Auflösung und diesem quantifizierten Qualitätsniveau für eine Anzahl von Durchläufen größer oder gleich zwei wenigstens die folgenden Mittel umfasst:
für die wenigstens eine Gruppe von Blöcken wenigstens Codierungsmittel, die dafür ausgelegt sind, während eines ersten Durchlaufs, der einem ersten Codierungsschritt entspricht, für jeden Block der wenigstens einen Gruppe von Blöcken codierte Daten zu erzeugen, die für eine Prädiktion eines höheren quantifizierten Qualitätsniveaus nützlich sind, wobei die für eine Prädiktion eines höheren quantifizierten Qualitätsniveaus nicht nützlichen Daten während wenigstens eines anderen Durchlaufs codiert werden,
derart, dass für wenigstens einen Block der wenigstens einen Gruppe von Blöcken die Daten, die während der Durchläufe codiert werden, bei der Decodierung kombinierbar sind, um eine Decodierung des Blocks zu liefern, und
Mittel zum Einfügen jedes Codierungsdurchlaufs in einen Slice im Sinne der SVC-Syntax.

7. Vorrichtung zum Decodieren eines Bildes oder einer Folge von Bildern, die von einem Datenstrom in Form von Gruppen von Blöcken stammen, wobei wenigstens eine Gruppe von Blöcken Bildblöcke, die die gleiche Auflösung und das gleiche quantifizierte Qualitätsniveau haben, umgruppiert, wobei der Strom für jeden Block der wenigstens einen Gruppe von Blöcken Daten enthält, die durch wenigstens zwei Durchläufe codiert worden sind, wobei jeder Codierungsdurchlauf in einen Slice im Sinne der SVC-Syntax eingefügt wird,
**dadurch gekennzeichnet, dass** ein erster Durchlauf, der einem ersten Codierungsschritt entspricht, bei der Codierung von Daten ausgeführt wird und dafür ausgelegt ist, codierte Daten zu erzeugen, die für eine Prädiktion eines höheren quantifizierten Qualitätsniveaus nützlich sind, wobei die für eine Prädiktion eines höheren quantifizierten Qualitätsniveaus nicht nützlichen Daten für wenigstens einen Block der Gruppe von Blöcken während wenigstens eines anderen Durchlaufs codiert werden,
wobei die Vorrichtung für die Decodierung der wenigstens einen Gruppe von Blöcken mit dieser Auflösung und diesem quantifizierten Qualitätsniveau für jeden Block der wenigstens einen Gruppe von Blöcken für jeden Durchlauf Mittel zum Decodieren von in dem Durchlauf codierten Daten umfasst, derart, dass für wenigstens einen Block der wenigstens einen Gruppe von Blöcken die Decodierung des Blocks eine Kombination von Daten ist, die hierfür durch die Decodierungsmittel, die auf jeden Durchlauf bezogen sind, decodiert worden sind.

8. Signal zum Senden eines durch das Verfahren nach einem der Ansprüche 1 bis 4 codierten Datenstroms, **dadurch gekennzeichnet, dass** ein Kopf der Gruppe von Blöcken außerdem Informationen enthält, die den Typ der Kombination angeben, die zwischen den durch die verschiedenen Codierungsschritte codierten Daten auszuführen ist.

9. Computerprogrammprodukt, das von einem Kommunikationsnetz hochladbar und/oder auf einem von einem Computer lesbaren Träger aufgezeichnet und/oder durch einen Prozessor ausführbar ist, **dadurch gekennzeichnet, dass** es Programmcodebefehle für die Ausführung des Codierungsverfahrens nach einem der Ansprüche 1 bis 4 enthält.

## Claims

1. Method for coding of an image or a sequence of images generating a stream of data in the form of groups of blocks, at least one group of blocks grouping together image blocks having an identical resolution and an identical level of quality in terms of quantization, **characterized in that** said method comprises, for the coding of said at least one group of blocks at said resolution and said level of quality in terms of quantization, a number of coding passes greater than or equal to two, a first pass corresponding to a first coding step suitable for generating, for each block of the at least one group of blocks, coded data that are useful for a prediction of a higher level of quality in terms of quantization, the data that are not useful for a prediction of a higher level of quality in terms of quantization for at least one block of said at least one group of blocks being coded during at least one other pass,
so that for at least one block of said at least one group of blocks, the data coded during the passes can be combined on decoding to provide a decoding of said block,
the method moreover comprising the insertion of each coding pass into a slice in the sense of the SVC syntax.

2. Coding method according to Claim 1, **characterized in that** the data coded during the passes can be combined so that the combination of the coded data corresponds to an addition of these data.

3. Coding method according to Claim 1, **characterized in that** the coded data can be combined so that the combination of the coded data corresponds to a substitution of the data coded by the first coding by the data coded by the second coding.

4. Coding method according to any one of the preceding claims, **characterized in that**, the groups of blocks of the stream of data exhibiting a hierarchical structure of nested data layers of n consecutive levels, where n is an integer, each of said layers corresponding to a predetermined resolution and predetermined range of encoding quality levels of said groups of blocks so that the resolution and/or the encoding quality level grows with the increase in the order of the layers, at least one layer n+1 coded by prediction based on the lower layer n, the coding by prediction of the upper layer uses only the data coded during the first step of coding.

5. Method for decoding of an image or a sequence of images originating from a stream of data in the form of groups of blocks, at least one group of blocks grouping together image blocks having an identical resolution and an identical level of quality in terms of quantization, said stream containing, for each block of the at least one group of blocks, data coded by at least two passes, each coding pass being inserted into a slice in the sense of the SVC syntax,
**characterized in that**, a first pass corresponding to a first step of coding being conducted when the data is coded and being suitable for generating coded data that are useful for a prediction of a higher level of quality in terms of quantization, data that are not useful for a prediction of a higher level of quality in terms of quantization for at least one block of said at least one group of blocks being coded during at least one other pass,
said method of decoding comprises, for the decoding of said at least one group of blocks at said resolution and at said level of quality in terms of quantization, for each pass, for the at least one group of blocks, at least one step of decoding of the coded data for each block of said group of blocks,
so that for at least one block of said group of blocks, the decoding of said block is a combination of the data decoded for the latter by the decoding steps linked to each pass.

6. Device for coding of an image or a sequence of images generating a stream of data in the form of groups of blocks, at least one group of blocks grouping together image blocks having an identical resolution and an identical level of quality in terms of quantization, **characterized in that** said device comprises, for the coding of said at least one group of blocks at said resolution and at said level of quality in terms of quantization, for a number of passes greater than or equal to two, at least the following means:
for the at least one group of blocks, at least coding means suitable for generating, during a first pass corresponding to a first step of coding, for each block of the at least one group of blocks, coded data that are useful for a prediction of a higher level of quality in terms of quantization, data that are not useful for a prediction of a higher level of quality in terms of quantization being coded during at least one other pass,
so that for at least one block of said at least one group of blocks, the data coded during the passes can be combined on decoding to provide a decoding of said block,
means of insertion of each coding pass into a slice in the sense of the SVC syntax.

7. Device for decoding of an image or a sequence of images originating from a stream of data in the form of groups of blocks, at least one group of blocks grouping together image blocks having an identical resolution and an identical level of quality in terms of quantization, said stream comprising, for each block of the at least one group of blocks, data coded by at least two passes, each coding pass being inserted into a slice in the sense of the SVC syntax,
**characterized in that**, a first pass corresponding to a first step of coding being conducted when the data is coded and being suitable for generating coded data that are useful for a prediction of a higher level of quality in terms of quantization, data that are not useful for a prediction of a higher level of quality in terms of quantization for at least one block of said at least one group of blocks being coded during at least one other pass,
said device comprises, for the decoding of said at least one group of blocks at said resolution and at said level of quality in terms of quantization, for each block of said at least one group of blocks, for each pass, means for decoding the data coded in the pass, so that for at least one block of said at least one group of blocks, the decoding of said block is a combination of the data decoded for this latter by the decoding means linked to each pass.

8. Transmission signal of a stream of data encoded by the method according to one of Claims 1 to 4, **characterized in that** a header of the group of blocks moreover comprises an item of information indicating the type of combination to be made between the data coded by the different steps of coding.

9. Computer program product downloadable from a communications network and/or recorded on a medium readable by computer and/or executable by a processor, **characterized in that** it comprises programme code instructions for the implementation of the coding method according to at least one of Claims 1 to 4.
